# EUROPÄISCHE PATENTANMELDUNG

(11) **EP 1 529 906 A2**
(43) Veröffentlichungstag der Anmeldung: **11.05.2005**
(21) Anmeldenummer: 04026025.9
(22) Anmeldetag: 03.11.2004
(51) Int. Cl.: E05B 65/12, B60J 7/185

(54) **Kraftunterstützter Verschluss für Verdecke, Klappen oder dergleichen an Fahrzeugen**

(30) Priorität: 07.11.2003 DE 10352489
(71) Anmelder: ISE Industries GmbH, 51702 Bergneustadt (DE)
(72) Erfinder: Ellenbeck, Günter, 45883 Gelsenkirchen (DE)
(74) Vertreter: Patentanwälte Wenzel & Kalkoff

(57) **Zusammenfassung**

Die Erfindung betrifft einen kraftunterstützten Verschluß für Verdecke, Klappen oder dergleichen an Fahrzeugen mit einem zwischen einer Öffnungslage und einer Schließlage bewegbaren, schwenkbar gelagerten Fanghaken und einem mit dem Fanghaken zusammenwirkenden kraftspendenden Antriebselement, wobei neben dem Fanghaken eine mit dem Antriebselement zusammenwirkende Funktionsscheibe gelenkig gelagert ist und in spielbehafteter Mitnehmerverbindung mit dem Fanghaken steht. Um einen Verschluß bereitzustellen, der sich auch manuell in eine gesicherte Schließlage bewegen läßt, ist vorgesehen, daß neben dem Fanghaken eine mit dem Antriebselement zusammenwirkende Funktionsscheibe gelenkig gelagert ist und in spielbehafteter Mitnehmerverbindung mit dem Fanghaken steht, wobei der Fanghaken in einem durch das Spiel begrenzten Bereich manuell verschwenkbar ist und neben dem Fanghaken eine mindestens einen Rastvorsprung aufweisende Sperrklinke derart angeordnet ist, daß diese beim manuellen Verschwenken des Fanghakens aus der Öffnungslage in Richtung der Schließlage mit einer entsprechend dem Rastvorsprung ausgebildeten Rastmarke am Fanghaken in Eingriff kommt.

## Beschreibung

Die Erfindung betrifft ein kraftunterstützten Verschluß für Verdecke, Klappen oder dergleichen an Fahrzeugen mit
- einem zwischen einer Öffnungslage und einer Schließlage bewegbaren, schwenkbar gelagerten Fanghaken und
- einem kraftspendenden Antriebselement, zum Antrieb des Fanghakens.

Derartige Verschlüsse werden bevorzugt an Verdeckkästen zur Verriegelung der Verdeckkästendeckel eingesetzt, können jedoch auch als Verschlüsse für Verdecke, Klappen oder dergleichen an Fahrzeugen eingesetzt werden. Diese Verschlüsse sind zwischen einer Öffnungslage, in der sie einen mit dem Fanghaken in Eingriff bringbares Schließelement, bspw. einen Verschlußzapfen einer Verschließeinheit freigeben und einer Schließlage, in der sie den Verschlußzapfen arretieren, verschwenkbar.

Bekannte Ausführungsformen derartiger Verschlüsse weisen jedoch den Nachteil auf, daß sie sich nach Ausfall eines den Verschluß antreibenden Antriebselements in der Öffnungslage des Verschlusses entweder nicht manuell schließen lassen oder daß die geschlossene Position nicht gesichert ist, so daß die Gefahr besteht, daß der Verschluß sich selbsttätig öffnet. Dieses ist insbesondere deshalb nachteilig, weil bspw. mit einem geöffneten Verdeckkasten trotz eines grundsätzlichen fahrbereiten Fahrzeugs nicht die Weiterfahrt zu einer Werkstatt angetreten werden kann, ohne eine Beschädigung des Verdeckkastens und angebauter Teile in Kauf nehmen zu müssen.

Der Erfindung liegt die Aufgabe zugrunde, einen Verschluß bereitzustellen, der sich auch manuell in eine gesicherte Schließlage bewegen läßt.

Die Erfindung löst die Aufgabe durch einen Verschluß gemäß Anspruch 1. Vorteilhafte Weiterbildungen der Erfindung sind in den abhängigen Ansprüchen angegeben.

Bei einem Verschluß gemäß der Erfindung erfolgt die Steuerung des Bewegungsablaufs eines Fanghakens in der Regel über ein Antriebselement, das mit einer Funktionsscheibe zusammenwirkt, d.h. direkt oder indirekt mit der Funktionsscheibe verbunden ist, so daß ein Verschieben, Verschwenken, Verdrehen oder dergleichen des Antriebselements zwischen einer Anfangsstellung und einer Endstellung ein Verschwenken der Funktionsscheibe und folglich ein Verschwenken des Fanghakens zwischen einer Öffnungslage und einer Schließlage zur Folge hat.

Die Übertragung der Antriebsbewegung von der Funktionsscheibe auf den Fanghaken erfolgt bei dem erfindungsgemäßen Verschluß über eine spielbehaftete Mitnehmerverbindung zwischen Fanghaken und Funktionsscheibe. In Abhängigkeit von der Größe des Spiels ist es möglich, den Fanghaken relativ zur Funktionsscheibe, bzw. die Funktionsscheibe relativ zum Fanghaken zu bewegen, ohne daß dabei das Antriebselement aktiviert bzw. verschoben werden muß.

Grundsätzlich wird die durch das Antriebselement hervorgerufene Antriebsbewegung nach Überbrückung des Spiels zwischen dem Fanghaken und der Funktionsscheibe kontinuierlich auf den Fanghaken übertragen, der sich dann proportional zum Antriebselement bewegt.

Vorteilhafterweise ist die spielbehaftete Mitnehmerverbindung jedoch derart ausgestaltet, daß der Fanghaken im störungsfreien Betriebszustand in Richtung der Schließlage des Fanghakens spielfrei mit der Funktionsscheibe verbunden ist, so daß eine durch den Antrieb eingeleitete Öffnungsbewegung direkt, nämlich ohne Überbrückung des Spiels auf den Fanghaken übertragen werden kann. Im Falle einer Störung steht dann, ausgehend von der Öffnungslage des Fanghakens, beim manuellen Verschwenken des Fanghakens in Richtung der Schließlage das maximale Spiel für die manuelle Schwenkbewegung zur Verfügung.

Im wesentlichen nach vollständiger Beendigung der durch das Spiel möglichen manuellen Schwenkbewegung des Fanghakens, wobei die Funktionsscheibe in ihrer Stellung verharrt, kommt ein Rastvorsprung einer Sperrklinke dann mit einer entsprechend ausgebildeten Rastmarke an dem Fanghaken in Eingriff und verriegelt die durch manuelles Verschwenken erreichte Verschlußposition, in der ein mit dem Verschluß zusammenwirkendes Schließelement, bspw. ein Verschlußzapfen sicher an dem Fanghaken arretiert ist.

Um im regulären Betrieb, d.h. im störungsfreien Betrieb, bei dem der Fanghaken alleine durch das Antriebselement zwischen der Öffnungslage und der Schließlage verschwenkt wird, Störungen zu vermeiden und einen reibungslosen Betrieb zu gewährleisten, ist die Sperrklinke so angeordnet, daß der Rastvorsprung während des regulären Betriebs nicht mit der Rastmarke am Fanghaken in Eingriff kommt.

Der erfindungsgemäße Verschluß ermöglicht es, bei einem Ausfall des Antriebselements eine manuelle Verriegelung des mit dem Verschluß versehenen Verdecks, Verdeckkastendeckel oder einer sonstigen Klappe zu erreichen, so daß zumindest eine Weiterfahrt zu einer Werkstatt vorgenommen werden kann, ohne daß befürchtet werden muß, daß die Klappe, das Verdeck, der Verdeckkastendeckel oder dergleichen aufspringt, was insbesondere bei höheren Fahrtgeschwindigkeiten und einem entsprechenden Winddruck zu einer Beschädigung der Bauteile führen kann.

Eine manuelle Verriegelung des Verschlusses ist dabei unabhängig von der Art der Beschädigung und der Stellung des Antriebs jederzeit möglich. Das Lösen der Verriegelung kann automatisch bei wieder aktiviertem Antrieb erfolgen, wenn sich der Fanghaken in der vollständigen Schließstellung befindet.

Wie bereits oben dargestellt kann die Funktionsscheibe direkt oder indirekt mit dem Antriebselement verbunden sein, so daß in Abhängigkeit vom Einsatzzweck und den konstruktiven Bedingungen die Kopplung zwischen Funktionsscheibe und Antriebselement frei gewählt werden kann. Nach einer vorteilhaften Weiterbildung der Erfindung ist die Funktionsscheibe jedoch gelenkig mit dem Antriebselement verbunden. Eine direkte Anbindung der Funktionsscheibe gemäß dieser Weiterbildung der Erfindung ermöglicht es, auf zusätzliche, den Aufbau verkomplizierende Schließbauteile zu verzichten, so daß sich ein derartig weitergebildeter Verschluß besonders einfach und kostengünstig herstellen läßt.

Nach einer weiteren Ausführungsform der Erfindung kann eine schwenkbar an einer am Verschluß ortsfesten Drehachse gelenkig gelagerte Schwinge einerseits der Drehachse gelenkig mit dem Antriebselement und andererseits die Drehachse gelenkig mit der Funktionsscheibe verbunden sein. Die Übertragung der Bewegung des Antriebselements auf die Funktionsscheibe unter Zwischenschaltung der Schwinge erlaubt es bei einer entsprechenden Anlenkung der Schwinge, die dann als Getriebehebel fungiert, die Antriebsbewegung in eine vergrößerte Schwenkbewegung des Fanghakens zu übersetzen oder die Zuziehkraft zu steigern. Der Antrieb des Fanghakens erfolgt in unveränderter Weise in der oben dargestellten Form, nämlich durch die spielbehaftete Mitnehmerverbindung der Funktionsscheibe mit dem Fanghaken.

Die spielbehaftete Mitnehmerverbindung zwischen dem Fanghaken und der Funktionsscheibe kann grundsätzlich beliebig ausgeführt sein. Nach einer vorteilhaften Weiterbildung der Erfindung ist diese jedoch durch eine an dem Fanghaken angeordnete Führung sowie einem an der Funktionsscheibe angeordneten und in der Führung verschiebbaren Führungselement gebildet, wobei der Fanghaken in einem durch die Führung begrenzten Bereich manuell verschwenkbar ist. Nach einer besonders vorteilhaften Weiterbildung der Erfindung ist dabei das Führungselement durch eine von der Funktionsscheibe in Richtung auf den Fanghaken vorstehenden Führungsbolzen und die Führung durch ein entsprechend dem Führungsbolzen ausgebildetes Langloch am Fanghaken gebildet.

In Abhängigkeit von den Abmessungen der Führung, insbesondere der Abmessungen des Langlochs und des Führungselements, insbesondere des Führungsbolzens, kann das Spiel zwischen dem Fanghaken und der Funktionsscheibe in einfacher Weise an die geforderten konstruktiven Bedingungen angepaßt werden, wobei insbesondere die Ausgestaltung der Führung und des Führungselements als Langloch und Führungsbolzen eine besonders einfache Ausgestaltung darstellen, die sich besonders kostengünstig herstellen läßt.

Im Falle der oben dargestellten direkten Verbindung des Antriebselements an die Funktionsscheibe ist nach einer besonders vorteilhaften Weiterbildung des erfindungsgemäßen Verschlusses die Funktionsscheibe einerseits der gelenkigen Lagerung mit dem Antriebselement verbunden und weist andererseits ihrer gelenkigen Lagerung das Führungselement auf. Diese Anordnung der Funktionsscheibe bei direkter Anlenkung an das Antriebselement erlaubt es, den Verschluß insgesamt besonders kompakt auszuführen, insbesondere da nach einer besonders vorteilhaften Weiterbildung der Erfindung die Funktionsscheibe auch auf der gleichen Schwenkachse des Fanghakens angeordnet sein kann. Zudem kann über den frei wählbaren Abstand der Anlenkung der Funktionsscheibe an das Antriebselement und den Abstand zum Führungselement die übertragbare Kraft frei eingestellt und an die vorgegebenen Anforderungen angepaßt werden.

Auch die Sperrklinke kann grundsätzlich an beliebiger Stelle am Verschluß angeordnet werden, sofern gewährleistet ist, daß diese mit dem Rastvorsprung beim manuellen Verschwenken des Fanghakens aus der Öffnungslage in Richtung der Schließlage mit einer entsprechend dem Rastvorsprung ausgebildeten Rastmarke am Fanghaken in Eingriff kommt. Nach einer besonders vorteilhaften Weiterbildung der Erfindung ist die Sperrklinke jedoch im Bereich eines einem Schließmaul des Fanghakens gegenüberliegenden hinteren Bereichs angeordnet und mit dem Rastvorsprung mit einem im hinteren Bereich des Fanghakens ausgebildeten Rastmarke in Eingriff bringbar.

Insbesondere bei einem sich vom Schließmaul weg erstreckenden Antriebselement erlaubt diese Weiterbildung der Erfindung die platzsparende Anordnung der Sperrklinke zwischen dem hinteren Ende des Fanghakens und dem Antriebselement, so daß die Größe des Verschlusses in ergänzender Weise reduziert werden kann. Zudem kann bei dieser Anordnung der Sperrklinke der Fanghaken sowie das Schließmaul im wesentlichen frei gestaltet werden, ohne daß dieser bzw. im Kontaktbereich mit einem Anschlußzapfen an eine andernfalls vorhandene Sperrklinke angepaßt werden muß.

Nach einer weiteren vorteilhaften Ausgestaltung der Erfindung ist die Sperrklinke in eine von dem Fanghaken wegweisende Richtung vorgespannt. Diese Ausgestaltung der Erfindung gewährleistet in besonders vorteilhafter Weise, daß der Rastvorsprung der Sperrklinke nur im Falle einer manuellen Betätigung mit einer Rastmarke am Fanghaken in Eingriff bringbar ist. Nach einer besonders vorteilhaften Weiterbildung der Erfindung ist dabei die Vorspannung so ausgerichtet, daß diese auch die Position sichert, in der sich der Rastvorsprung und die Rastmarke am Fanghaken in Eingriff befinden, wenn eine manuelle Betätigung des Fanghakens stattgefunden hat.

Die Auswahl des Spannelements ist dabei frei wählbar. Nach einer besonders vorteilhaften Weiterbildung der Erfindung ist die Sperrklinke jedoch unter Verwendung einer einerseits an einem an der Sperrklinke befestigten Bolzen und andererseits an einem am Verschluß angeordneten Bolzen gelagerten Spiralfeder vorgespannt. Die Spiralfeder zeichnet sich insbesondere dadurch aus, daß sie besonders kostengünstig ist und sich besonders leicht montieren läßt. Dabei gewährleistet sie zuverlässig die gewünschte Vorspannung der Sperrklinke in eine vom Ende des Fanghakens weg gerichtete Richtung, wobei die Anordnung der Bolzen die Vorspannrichtung der Sperrklinke vorgibt.

Wie bereits eingangs dargestellt, kann die Sperrklinke nach Reaktivierung des Antriebs durch vollständiges Verschwenken des manuell verriegelten Fanghakens in die Schließlage automatisch entriegelt werden. Um jedoch auch eine manuelle Entriegelung zu ermöglichen, weist die Sperrklinke nach einer besonders vorteilhaften Weiterbildung der Erfindung in einem dem Rastvorsprung gegenüberliegenden Bereich einen Vorsprung auf. Dieser Vorsprung ermöglicht es, die Sperrklinke entgegen der Rastrichtung zu Verschwenken, wobei die Rastmarke und der Rastvorsprung außer Eingriff kommen und der Fanghaken freigegeben wird. Dies kann insbesondere dann erforderlich sein, wenn es zur Reaktivierung des Antriebs erforderlich ist, den Verschluß zu öffnen, was ansonsten nur mit einem erheblichen Aufwand oder Spezialwerkzeug möglich ist.

Ein Verschwenken der Sperrklinke in eine Position, in der diese im Falle einer manuellen Verriegelung mit ihrem Rastvorsprung mit der Rastmarke am Fanghaken in Eingriff bringbar ist, kann grundsätzlich mit beliebigen konstruktiven Mitteln, bspw. mit zusätzlichen Steuerungshebeln oder -scheiben erfolgen. Nach einer vorteilhaften Weiterbildung der Erfindung ist die Sperrklinke jedoch derart angeordnet, daß sie in der Öffnungslage mit der Schwinge und/oder mit der Funktionsscheibe in Eingriff steht und in Richtung auf den Fanghaken verschwenkt ist, insbesondere an diesem anliegt.

Gemäß dieser Weiterbildung der Erfindung kommt die Schwinge und/oder die Funktionsscheibe beim Verschwenken des Fanghakens in die Öffnungslage mit einem Teil der Sperrklinke in Eingriff und verschwenkt diese in eine Position, die gewährleistet, daß die Rastmarke am Fanghaken mit dem Rastvorsprung an der Sperrklinke in Eingriff kommt, wenn der Fanghaken manuell verschwenkt wird. Dabei stellt insbesondere die Position, in der die Sperrklinke mit dem Rastvorsprung an der Rückseite des Fanghakens anliegt eine Position dar, in der besonders zuverlässig gewährleistet werden kann, daß im Falle einer manuellen Betätigung des Fanghakens dieser mit der Sperrklinke verriegelt.
Um das Verschwenken der Sperrklinke in Richtung auf die Rückseite des Fanghakens besonders reibungslos auszugestalten, steht nach einer besonders vorteilhaften Ausgestaltung der Erfindung die Schwinge und/oder die Funktionsscheibe in der Öffnungslage mit einem von dem Fanghaken vorstehenden Federelement, insbesondere einer Blattfeder in Eingriff.

Die Zwischenschaltung eines solchen Federelements erhöht den Anpressdruck der Sperrklinke an den Fanghaken und gewährleistet gleichzeitig, daß es nicht zu einer Beschädigung der Verschlußteile oder der Sperrklinke in Folge eines zu hohen Drucks kommt, der durch die Feder ausgeglichen werden kann.

Nach einer besonders vorteilhaften Ausgestaltung der Erfindung ist der Fanghaken in Richtung auf die Öffnungslage vorgespannt. Wobei nach einer besonders vorteilhaften Ausgestaltung der Erfindung ein einerseits an einem an dem Fanghaken angeordneten Bolzen und andererseits an dem Führungsbolzen abgestütztes Federelement, insbesondere eine Drehfeder den Fanghaken in Richtung auf die Öffnungslage vorspannt.

Die Vorspannung in Richtung auf die Öffnungslage gewährleistet dabei, daß der Fanghaken bei einer durch das Antriebselement gesteuerten Schwenkbewegung zwischen der Öffnungslage und der Schließlage direkt eine Schwenkbewegung proportional zur Bewegung des Antriebselements ausführt, da sich das Spiel zwischen der Funktionsscheibe und dem Fanghaken in die entgegengesetzte Richtung erstreckt. Die Vorspannung mittels der oben dargestellten Drehfeder stellt dabei eine besonders kostengünstige Variante dar, wobei der bereits vorhandene Führungsbolzen einseitig als Abstützelement für die Drehfeder genutzt werden kann, so daß gemäß dieser Weiterbildung der Erfindung nur ein zusätzlicher Bolzen am Fanghaken angeordnet werden muß.

Aufgrund der Besonderheiten des Verschlusses gemäß der Erfindung können grundsätzlich alle kraftspendenden Antriebselemente Verwendung finden, die in der Lage sind, den Fanghaken zwischen der Öffnungslage und der Schließlage zu bewegen, also Federn, Pneumatikzylinder, Hydraulikzylinder, elektrisch betriebene Mutterspindeleinheiten oder dergleichen. Es kommt lediglich darauf an, daß die von dem kraftspendenden Antriebselement aufgebrachte Schließbewegung umgekehrt werden kann.

Nach einer besonders vorteilhaften Weiterbildung der Erfindung ist als Antriebselement jedoch eine Schubstange vorgesehen. Die Schubstange kann, ggfs. unter Zwischenschaltung eines Gelenks direkt an der Funktionsscheibe oder der Schwinge angeordnet werden, so daß auf zusätzliche Kopplungselemente verzichtet werden kann, wodurch die Herstellungskosten des Verschlusses in ergänzender Weise gesenkt werden können.

Nach einer weiteren vorteilhaften Ausgestaltung der Erfindung ist ein Endschalter zur Anzeige der Öffnungs- und/oder Schließlage vorgesehen. Ein Endschalter, der nach einer besonders vorteilhaften Ausgestaltung der Erfindung auch mit dem Antriebselement gekoppelt ist, gewährleistet, daß nach Erreichen der Öffnungslage bzw. Schließlage diese angezeigt werden und der Antrieb entsprechend abgeschaltet wird, so daß einer Beschädigung des Verschlusses wirksam vorgebeugt werden kann. Zusätzlich können nach einer weiteren besonders vorteilhaften Ausgestaltung der Erfindung an dem Verschluß noch Endanschläge angeordnet werden, die in jedem Fall eine Beschränkung der Schwenkbewegung des Fanghakens gewährleisten, um Beschädigungen des Verschlusses oder eventueller Anbauteile in ergänzender Weise zuverlässig ausschließen zu können.

Ein Ausführungsbeispiel der Erfindung wird nachstehend mit Bezug auf die Zeichnungen näher erläutert. In den Zeichnungen zeigen:
- Fig. 1: eine perspektivische Ansicht einer Schließeinheit mit zwei Verschlüssen und einem Zentralantrieb;
- Fig. 2: eine Vorderansicht eines Verschlusses von Figur 1 in einem durch ein Antriebselement eingestellten geschlossenen Zustand;
- Fig. 3: eine Vorderansicht des Verschlusses von Figur 2 in einem durch das Antriebselement eingestellten geöffneten Zustand;
- Fig. 4: eine Vorderansicht des Verschlusses von Figur 2 in einem von Hand hervorgerufenen geschlossenen Zustand mit dem sich im geöffneten Zustand befindlichen Antriebselement und
- Fig. 5: eine Vorderansicht des Verschlusses von Figur 2 in dem von Hand geschlossenen Zustand mit dem sich zwischen dem geöffneten und dem geschlossenen Zustand befindlichen Antriebselement.

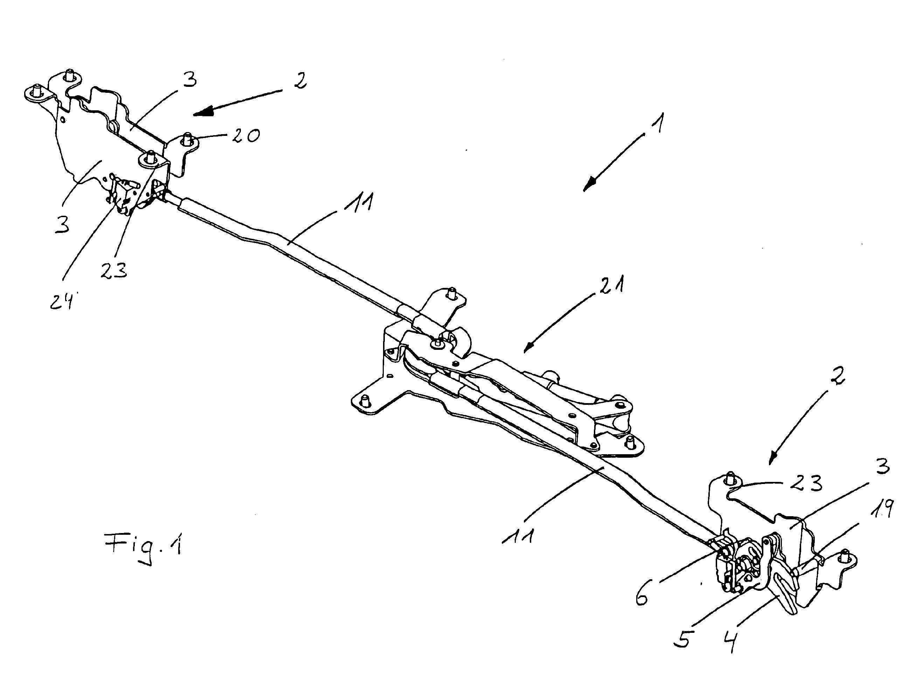

Bei der Verwendung der hier dargestellten Verschlüsse 2 zur Verriegelung von hier nicht dargestellten Verdeckkästen, Verdecken oder dergleichen werden diese in der Regel paarweise in einer in Figur 1 dargestellten Schließeinheit 1 verbaut, welche am Fahrzeug an einem Verdeck, Verdeckkastendeckel, Verdeckkastenrahmen, Klappe oder dergleichen angeordnet werden kann. Die Schließeinheit 1 weist einen mittig angeordneten Zentralantrieb 21 auf, der über ein Antriebsgestänge 11 mit den endseitig an diesen angeordneten Verschlüssen 2 verbunden ist, so daß ein in dem Verschluß 2 schwenkbar gelagerter Fanghaken 4 zwischen einer Öffnungslage und einer Schließlage verschwenkt werden kann.

Der in den Figuren 1 bis 5 dargestellte Verschluß 2 besteht aus einem Gehäuse, das aus sich gegenüberliegenden Blechscheiben 3 gebildet ist, die unter Verwendung von vernieteten Distanzbolzen 19 zu einer Einheit zusammengefügt sind.

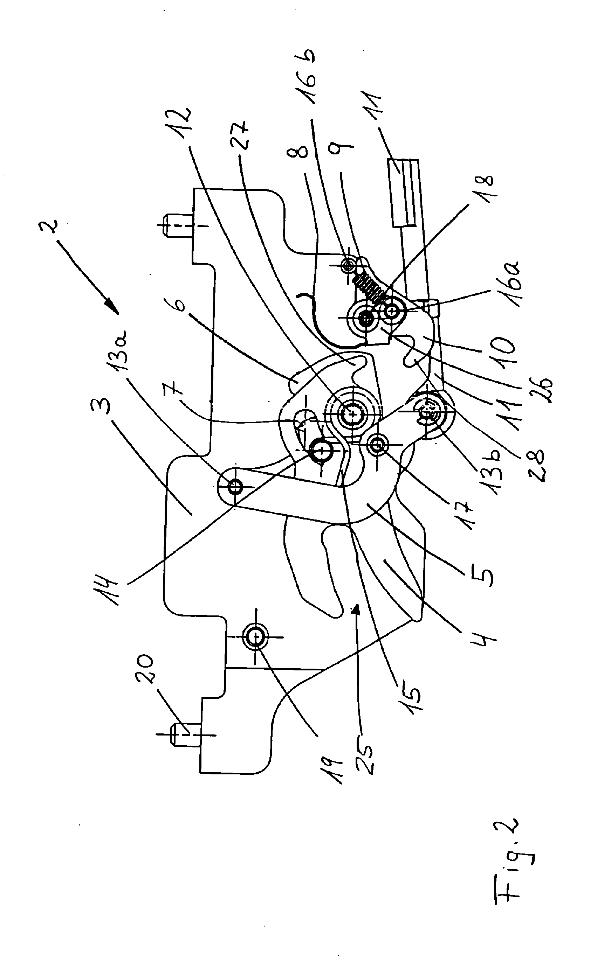

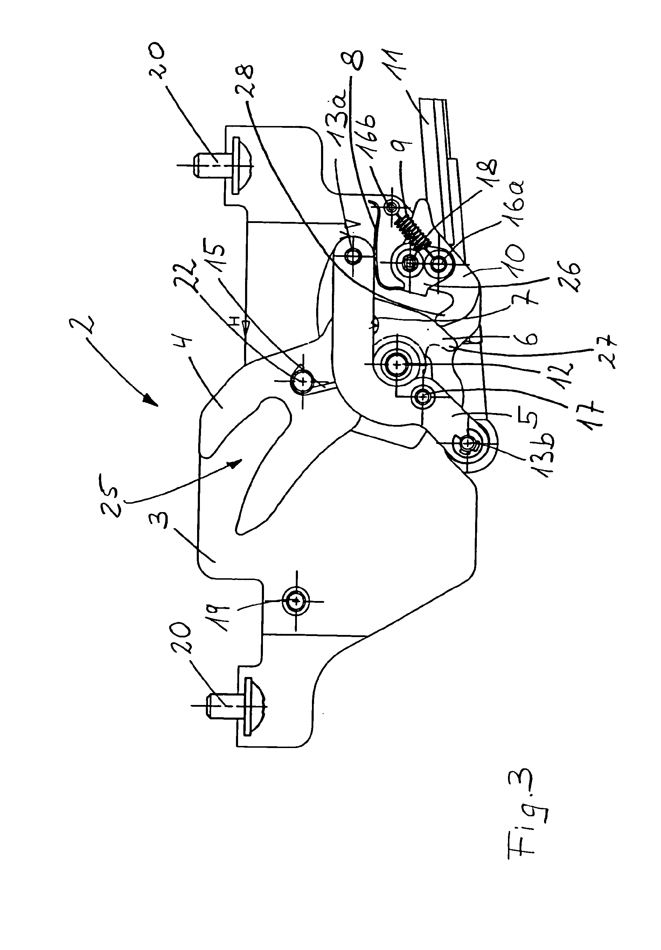

Der Fanghaken 4 ist an einem zentral angeordneten Lagerbolzen 12 zwischen der Schließlage (Figur 2) und der Öffnungslage (Figur 3) verschwenkbar gelagert. An seinem vorderen Ende weist der Fanghaken 4 ein Schließmaul 25 zum Eingriff mit einem hier nicht dargestellten Verschlußzapfen auf. Das dem Schließmaul 25 gegenüberliegende Ende weist eine Rastmarke 27 auf.

Zwei beiderseits des Fanghakens 4 angeordnete, endseitig über Gelenkstifte 13a, 13b miteinander verbundene Blechstreifen bilden eine Schwinge 5, die wiederum an einem ortsfest am Gehäuse angeordneten Zapfen 17 schwenkbar gelagert ist.

Neben der endseitigen Verbindung der Blechteile zur Bildung einer Schwinge 5 dienen die Gelenkstifte 13a, 13b zum einen ferner dazu, die Schwinge 5 an ihrem dem Antriebsgestänge 11 zugeordneten unteren Ende gelenkig mit dem dem Zentralantrieb 21 abgewandten Ende des Antriebsgestänges 11 zu verbinden und zum anderen dazu, die Schwinge 5 gelenkig mit einem Ende einer ebenfalls an dem Lagerbolzen 12 schwenkbar angeordneten Funktionsscheibe 6 zu verbinden, die zwischen dem Fanghaken 4 und einem die Schwinge 5 bildenden Blechstreifen angeordnet ist.

Auf der Funktionsscheibe 6 ist ein Führungsbolzen 14 angeordnet, der in Richtung auf den Fanghaken 4 vorsteht und durch ein Langloch 7 im Fanghaken 4 hindurch ragt, so daß sich der Schwenkbereich des Fanghakens 4 in Abhängigkeit von der Position des Führungsbolzens 14 und dem Langloch 7 bestimmt.

Eine den Lagerbolzen 12 vollständig umschlingende und sich endseitig an den Führungsbolzen 14 und einer auf dem Fanghaken 4 angeordneten Bolzen 22 abstützende Drehfeder 15 spannt den Fanghaken 4 in Richtung auf die in Figur 3 dargestellte Öffnungslage vor.

Neben der Verriegelungseinheit bestehend aus Fanghaken 4, Schwinge 5 und Funktionsscheibe 6 ist im Bereich des hinteren Endes des Fanghakens 4 eine Sperrklinke 10 um ihren mittleren Bereich verschwenkbar an einem am Gehäuse angeordneten Lagerzapfen 18 angeordnet.

Eine einerseits an einem an der Sperrklinke 10 angeordneten Stift 16a und andererseits an einem am Gehäuse angeordneten Lagerstift 16b befestigte Spiralfeder 9 spannt die Sperrklinke 10 in eine von dem Fanghaken 4 weggerichtete Position vor. Ein erstes Ende der Sperrklinke 10 weist einen an die Rastmarke 27 des Fanghakens 4 angepaßten Rastvorsprung 28 auf. Ein dem ersten Ende gegenüberliegendes zweite Ende der Sperrklinke 10 ist so ausgestaltet, daß es in der durch die Spiralfeder 9 vorgespannten Position an dem Lagerstift 16b anliegt und die Schwenkbewegung der Sperrklinke 10 in Vorspannrichtung begrenzt.

Neben der Lagerung der Sperrklinke 10 und der Befestigung der Spiralfeder 9 dienen der Lagerzapfen 18 und der Lagerstift 16a ferner zur verdrehfesten Anordnung einer die Sperrklinke 10 bereichsweise umgreifenden Hülse 26, die mit einer Blattfeder 8 verbunden ist, die sich von dem Antriebsgestänge 11 aus gesehen oberhalb der Sperrklinke 10 erstreckt.

Zur Befestigung des Verschlusses an einem Verdeckkasten, Verdeck, Verdeckkastenrahmen oder dergleichen weist dieser Flansche 23 auf, die zur Aufnahme von Schrauben 20 ausgebildet sind.

Im störungsfreien Betrieb werden die Verschlussteile 4, 5, 6, io durch das Verschieben des Antriebsgestänges 11 zwischen der in Figur 2 dargestellten Schließlage und der in Figur 3 dargestellten Öffnungslage bewegt. Das Antriebsgestänge 11 wird dabei vom Zentralantrieb 21 aus gesehen in Richtung auf den Verschluß 2 verschoben, wodurch die Schwinge 5 um den Zapfen 17 verschwenkt wird. Aufgrund der gelenkigen Verbindung der Schwinge 5 und der Funktionsscheibe 6 wird beim Verschwenken der Schwinge 5 auch die Funktionsscheibe 6 verschwenkt, nämlich um den Lagerbolzen 12, wobei ebenfalls der fest mit der Funktionsscheibe 6 verbundene Führungsbolzen 14 um den Lagerbolzen 12 verschwenkt wird.

Infolge der durch die Drehfeder 15 hervorgerufenen Vorspannung des Fanghakens 4 in Richtung auf die Öffnungslage und aufgrund der Verschiebung des Führungsbolzens 14 in dem Langloch 7 des Fanghakens 4 wird dieser beim Verschwenken der Funktionsscheibe 6 in die Öffnungslage verschwenkt, wobei der Führungsbolzen 14 ständig an der dem Schließmaul 25 zugewandten Ende des Langlochs 7 anliegt.

Während der Öffnungsbewegung kommt die Schwinge 5 im Bereich des Gelenkstiftes 13a mit der Blattfeder 8 der Sperrklinke 10 in Eingriff und drückt diese nieder, so daß die Sperrklinke 10 entgegen der durch die Spiralfeder 9 hervorgerufene Vorspannung in Richtung auf das dem Schließmaul 25 gegenüberliegende Ende des Fanghakens 4 verschwenkt wird und mit dem Rastvorsprung 28 an diesem zur Anlage jedoch nicht mit der Rastmarke 27 des Fanghakens 4 in Eingriff kommt.

Zum Öffnen des Verschlusses 2 wird die Wirkrichtung des Antriebsgestänges 11 umgekehrt, wobei sich die vorherigen Bewegungen umkehren.

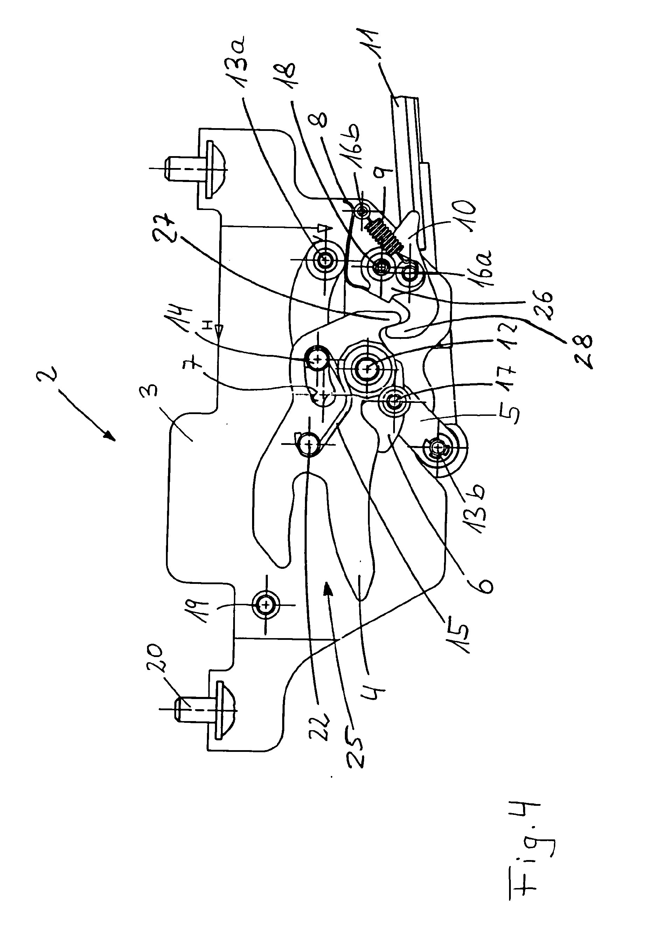

Im Falle eines Ausfalls des Zentralantriebs 21 im geöffneten Zustand des Verschlusses 2 erlaubt der oben dargestellte Aufbau des Verschlusses 2 die manuelle Verriegelung des Verdecks, des Verdeckkastendeckels oder dergleichen, wobei der Verschluß 2 von Hand aus der in Figur 3 dargestellten Öffnungslage in die in Figur 4 dargestellte Verschlußlage bewegt wird.

Der Fanghaken 4 wird dabei durch Niederdrücken des Verdecks oder des Verdeckkastendeckels ebenfalls niedergedrückt. Aufgrund der Anbindung des Fanghakens 4 an die Funktionsscheibe 6 über den in dem Langloch 7 geführten Führungsbolzen 14 beschränkt sich die Bewegung der Verschlußteile 4, 5, 6 bei der manuellen Betätigung allein auf den Fanghaken 4, der soweit verschwenkt werden kann, bis der Führungsbolzen 14 an dem dem Schließmaul 25 gegenüberliegenden Ende des Langlochs 7 zur Anlage kommt.

Aufgrund des Stillstands der übrigen Verschlußteile, nämlich der Schwinge 5 und der Funktionsscheibe 6 bleibt die Sperrklinke 10 mit ihrem Rastvorsprung 28 in Richtung auf den Fanghaken 4 vorgespannt. Beim manuellen Verschwenken des Fanghakens 4 gleitet der Rastvorsprung 28 der Sperrklinke 10 über das dem Schließmaul 25 gegenüberliegende Ende des Fanghakens 4, bis es mit der Rastmarke 27 des Fanghakens 4 in Eingriff kommt und diesen somit in der durch manuelles Verschwenken erreichten Position verriegelt.

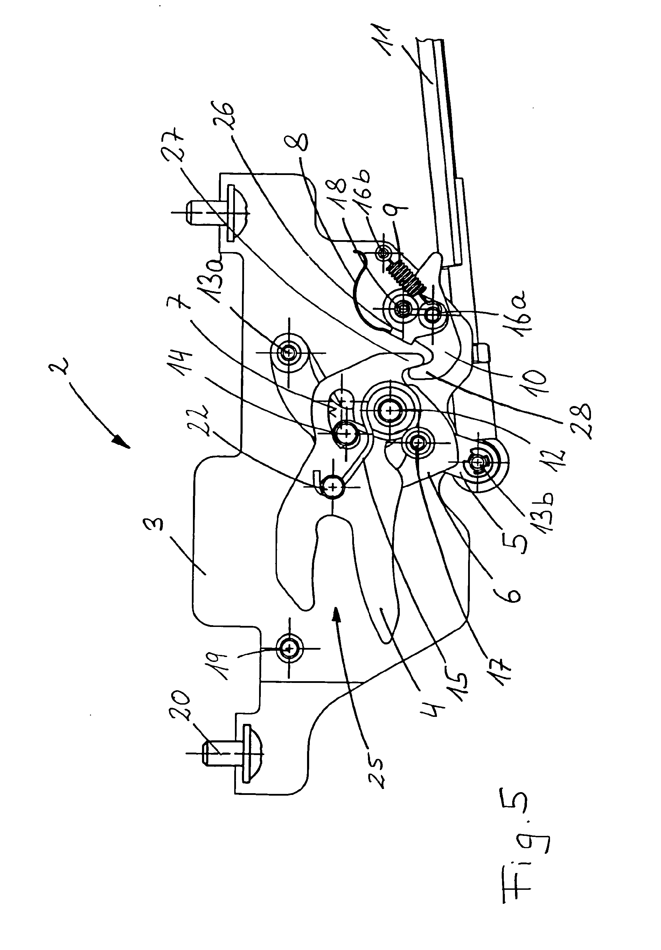

Auch nach Entlastung der Blattfeder 8, nämlich dann wenn der Zentralantrieb 21 sich aus der Öffnungslage über die in Figur 5 dargestellte Teilöffnungslage durch manuelles Betätigen bewegt, bleibt der Fanghaken 4 durch die Sperrklinke 10 verriegelt. Ein Lösen der Verriegelung zwischen Fanghaken 4 und Sperrklinke 10 kann manuell durch das dem Rastvorsprung 28 gegenüberliegende Ende der Sperrklinke 10 erfolgen oder erst dann, wenn der Fanghaken 4 vollständig durch den Antrieb in die in Figur 2 dargestellte Position verschwenkt ist, wobei die Schwinge 5 und die Funktionsscheibe 6 mit der Blattfeder 8 außer Eingriff sind und die Rastmarke 27 am Fanghaken 4, den Rastvorsprung 28 an der Sperrklinke 10 freigibt.

Jeweils ein an den Verschlüssen 2 angeordneter Endschalter 24 dient zum Erkennen und Anzeigen des Erreichens der Öffnungs- und Schließlage des Fanghakens 4.

## Patentansprüche

1. Kraftunterstützter Verschluß für Verdecke, Klappen oder dergleichen an Fahrzeugen mit
- einem zwischen einer Öffnungslage und einer Schließlage bewegbaren, schwenkbar gelagerten Fanghaken und
- einem kraftspendenden Antriebselement zum Antrieb des Fanghakens,
**dadurch gekennzeichnet, daß**
- neben dem Fanghaken (4) eine mit dem Antriebselement (11) zusammenwirkende Funktionsscheibe (6) gelenkig gelagert ist und in spielbehafteter Mitnehmerverbindung mit dem Fanghaken (4) steht, wobei der Fanghaken (4) in einem durch das Spiel begrenzten Bereich manuell verschwenkbar ist und
- neben dem Fanghaken (4) eine mindestens einen Rastvorsprung aufweisende Sperrklinke (10) derart angeordnet ist, daß diese beim manuellen Verschwenken des Fanghakens (4) aus der Öffnungslage in Richtung der Schließlage mit einer entsprechend dem Rastvorsprung (28) ausgebildeten Rastmarke (27) am Fanghaken (4) in Eingriff kommt.

2. Kraftunterstützter Verschluß nach Anspruch 1, **dadurch gekennzeichnet, daß** die Funktionsscheibe (6) gelenkig mit dem Antriebselement (11) verbunden ist.

3. Kraftunterstützter Verschluß nach Anspruch 1 oder 2, **dadurch gekennzeichnet, daß** eine schwenkbar an einer am Verschluß (2) ortsfesten Drehachse (17) gelenkig gelagerte Schwinge (5) einerseits der Drehachse (17) gelenkig mit dem Antriebselement (11) und andererseits der Drehachse (17) gelenkig mit der Funktionsscheibe (6) verbunden ist.

4. Kraftunterstützter Verschluß nach einem oder mehreren der vorhergehenden Ansprüche, **dadurch gekennzeichnet, daß** die spielbehaftete Mitnehmerverbindung durch eine an dem Fanghaken (4) angeordneten Führung (7) sowie einem an der Funktionsscheibe (6) angeordneten und in der Führung (7) verschiebbaren Führungselement (14) gebildet ist, wobei der Fanghaken (4) in einem durch die Führung (7) begrenzten Bereich manuell verschwenkbar ist.

5. Kraftunterstützter Verschluß nach einem oder mehreren der vorhergehenden Ansprüche, **dadurch gekennzeichnet, daß** das Führungselement durch ein von der Funktionsscheibe (6) in Richtung auf den Fanghaken (4) vorstehenden Führungsbolzen (14) und die Führung durch ein entsprechend dem Führungsbolzen (14) ausgebildetes Langloch (7) am Fanghaken (4) gebildet ist.

6. Kraftunterstützter Verschluß nach einem oder mehreren der vorhergehenden Ansprüche, **dadurch gekennzeichnet, daß** die Funktionsscheibe (6) einerseits ihrer gelenkigen Lagerung mit dem Antriebselement (11) verbunden ist und andererseits ihrer gelenkigen Lagerung das Führungselement (14) aufweist.

7. Kraftunterstützter Verschluß nach einem oder mehreren der vorhergehenden Ansprüche, **dadurch gekennzeichnet, daß** die Sperrklinke (10) im Bereich eines einem Schließmaul (25) des Fanghakens (4) gegenüberliegenden hinteren Bereich angeordnet und mit dem Rastvorsprung (28) mit der im hinteren Bereich des Fanghakens (4) ausgebildeten Rastmarke (27) in Eingriff bringbar ist.

8. Kraftunterstützter Verschluß nach einem oder mehreren der vorhergehenden Ansprüche, **dadurch gekennzeichnet, daß** die Sperrklinke (10) in eine von dem Fanghaken (4) wegweisende Richtung vorgespannt ist.

9. Kraftunterstützter Verschluß nach einem oder mehreren der vorhergehenden Ansprüche, **dadurch gekennzeichnet, daß** die Sperrklinke (10) unter Verwendung einer einerseits an einem an der Sperrklinke (10) befestigten Bolzen (16a) und andererseits am Verschluß angeordneten Bolzen (16b) gelagerten Spiralfeder (18) vorgespannt ist.

10. Kraftunterstützter Verschluß nach einem oder mehreren der vorhergehenden Ansprüche, **dadurch gekennzeichnet, daß** die Sperrklinke (10) in einem dem Rastvorsprung (28) gegenüberliegenden Bereich einen Vorsprung aufweist.

11. Kraftunterstützter Verschluß nach einem oder mehreren der vorhergehenden Ansprüche, **dadurch gekennzeichnet, daß** die Sperrklinke (10) derart angeordnet ist, daß sie in der Öffnungslage mit der Schwinge (5) und/oder der Funktionsscheibe (6) in Eingriff steht und in Richtung auf den Fanghaken (4) verschwenkt ist, insbesondere an diesem anliegt.

12. Kraftunterstützter Verschluß nach einem oder mehreren der vorhergehenden Ansprüche, **dadurch gekennzeichnet, daß** die Schwinge (5) und/oder die Funktionsscheibe (6) in der Öffnungslage mit einem von dem Fanghaken (4) vorstehenden Federelement, insbesondere einer Blattfeder (8) in Eingriff steht.

13. Kraftunterstützter Verschluß nach einem oder mehreren der vorhergehenden Ansprüche, **dadurch gekennzeichnet, daß** der Fanghaken (4) in Richtung auf die Öffnungslage vorgespannt ist.

14. Kraftunterstützter Verschluß nach einem oder mehreren der vorhergehenden Ansprüche, **dadurch gekennzeichnet, daß** ein einerseits an einem an dem Fanghaken (4) angeordneter Bolzen (22) und andererseits an dem Führungsbolzen (14) abgestütztes Federelement, insbesondere eine Drehfeder (15) den Fanghaken (4) in Richtung auf die Öffnungslage vorspannt.

15. Kraftunterstützter Verschluß nach einem oder mehreren der vorhergehenden Ansprüche, **dadurch gekennzeichnet, daß** als Antriebselement eine Schubstange (11) vorgesehen ist.

16. Kraftunterstützer Verschluß nach einem oder mehreren der vorhergehenden Ansprüche, dadurchgekennzeichnet, daß ein Endschalter zur Anzeige der Öffnungs- und/oder Schließlage vorgesehen ist.
